# EUROPÄISCHE PATENTSCHRIFT

(11) **EP 3 118 021 B1**
(45) Veröffentlichungstag und Bekanntmachung des Hinweises auf die Patenterteilung: **14.02.2018**
(21) Anmeldenummer: 16177908.7
(22) Anmeldetag: 05.07.2016
(51) Int. Cl.: B60C 5/00, B60C 5/04, B60C 5/08, B60C 5/10

(54) **SYSTEM UND VORRICHTUNG ZUR ERZEUGUNG VON STROM IN FAHRZEUGEN MITTELS SCHLAUCHFÖRMIGEN RADEINSATZ AUS NANOTECH-MATERIALIEN**
SYSTEM AND DEVICE FOR GENERATING POWER IN VEHICLES BY MEANS OF TUBULAR WHEEL INSERTS MADE OF NANOTECH MATERIALS
SYSTEME ET DISPOSITIF DE PRODUCTION DE COURANT DANS DES VEHICULES A L'AIDE D'INSERT DE ROUE TUBULAIRE EN MATERIAU PROVENANT DE LA NANOTECHNOLOGIE

(30) Priorität: 12.07.2015 CH 10062015
(43) Veröffentlichungstag der Anmeldung: 18.01.2017
(73) Patentinhaber: Seiler, Hans Jörg, 8122 Binz ZH (CH)
(72) Erfinder: Seiler, Hans Jörg, 8122 Binz ZH (CH)
(74) Vertreter: Kasche, André

(56) Entgegenhaltungen:
- EP-A1- 2 338 697
- EP-A1- 2 610 072
- FR-A1- 2 962 370
- US-A1- 2006 243 043
- US-A1- 2007 122 622

## Beschreibung

Die vorliegende Erfindung betrifft einen zwischen dem Reifen und der Radfelge umfassten schlauchförmigen Radeinsatz, wobei der schlauchförmige Radeinsatz aus Nanotech-Materialien besteht bzw. diese enthält und/oder damit beschichtet ist, so dass bei mechanischer und/oder thermischer Einwirkung die Nanotech-Materialien elektrische Energie und/oder Wärmeenergie erzeugen und diese Energie nutzbar vom schlauchförmigen Radeinsatz abgeleitet wird. Im Sinne dieser Erfindung, umfasst der Begriff Rad auch einen Reifen. Des Weiteren beschreibt die Erfindung Vorrichtungen, vorzugsweise Elektro- und Hybridfahrzeuge mit derartigen schlauchförmigen Radeinsätzen.

Fahrzeuge mit einem elektrischen Energiespeicher, der mit einer Vorrichtung zur Erzeugung von Strom, Energie und Wärme in Elektro-, Hybrid- und weiteren Fahrzeugen verbunden ist, sind weithin verbreitet. Der Antrieb des Fahrzeuges erfolgt wenigstens teilweise mittels der in dem elektrischen Energiespeicher gespeicherten Energie. Als elektrische Energiespeicher dienen Akkumulatoren und Batterien.

EP 2 610 072 A1 offenbart einen Reifen mit einer antistatischen Gummimischung, wobei die Gummimischung Kohlenstoffnanoröhrchen umfasst. EP 2 338 697 A1 offenbart eine Gummimischung umfassend Kohlenstoffnanoröhrchen zur Erhöhung der elektrischen Leitfähigkeit eines Reifens. US 2006/243043 A1 offenbart eine Kohlenstoffnanoröhrchenantenne zur Übermittlung von Daten aus einem Reifen. US2007/122622 A1 offenbart Kohlenstoffnanoröhrchen zur Wärmeleitung und Energieerzeugung im Kontext von elektronischen Modulen.

FR 2 962 370 A1, gemäß Oberbegriff des Anspruchs 1, offenbart einen Flugzeugreifen, dessen Gummimischung Kohlenstoffnanoröhrchen aufweist, um die thermische Leitfähigkeit der Gummimischung zu erhöhen. Weder FR 2 962 370 A1 noch andere Offenbarungen lehren eine Möglichkeit der Nutzung der thermischen Energie des Reifens.

Der vorliegenden Erfindung liegt die Aufgabe zugrunde, den Ladeprozess der Akkumulatoren oder Batterien in Fahrzeugen massgeblich zu verbessern.

Diese Aufgabe wird in einem ersten Aspekt mittels eines zwischen dem Reifen und der Radfelge umfassten schlauchförmigen Radeinsatzes gelöst, der mit Luft, Gasen oder Flüssigkeiten befüllbar ist und aus Nanotech-Materialien, vorzugsweise Kohlenstoffnanoröhrchen, besteht bzw. diese enthält und/oder damit beschichtet ist, **dadurch gekennzeichnet dass** bei mechanischer und/oder thermischer Einwirkung auf den schlauchförmigen Radeinsatz, Druck und/oder Wärme auf den schlauchförmigen Radeinsatz übertragen wird, und die Nanotech-Materialien elektrische Energie und/oder Wärmeenergie erzeugen und diese Energie nutzbar vom schlauchförmigen Radeinsatz abgeleitet wird.

Bei der mechanischen Einwirkung handelt es sich vorzugsweise um Abrolldeformationen am Reifen. Bei der thermischen Einwirkung handelt es sich vorzugsweise um Reibungswärme.

Ein weiterer Aspekt der Erfindung betrifft eine Vorrichtung, vorzugsweise ein Fahrzeug, umfassend wenigstens einen erfindungsgemässen schlauchförmigen Radeinsatz. In einer bevorzugten Ausführungsform hat das Fahrzeug wenigstens 2, vorzugsweise 4 oder weitere erfindungsgemässe schlauchförmige Radeinsätze.

In bevorzugten Ausführungsformen betrifft die Vorrichtung reine Elektro- oder Hybridfahrzeuge mit den erfindungsgemässen Merkmalen.

Der schlauchförmige, mit Luft, Gasen oder Flüssigkeiten befüllbare Radeinsatz sollte den Anforderungen der vorgesehenen Reifenbelastung standhalten. Der schlauchförmige Radeinsatz besteht aus bzw. enthält Nanomaterialien zur mechanoelektrischen und/oder thermoelektrischen Energieumwandlung, vorzugsweise Kohlenstoffnanoröhrchen (Nanotubes) und/oder Nanomaterialien und/oder Nanopartikel. Diese Materialien werden auch intelligente Werkstoffe bzw. Smart Materials genannt und haben eine aussergewöhnliche elektrische Leitfähigkeit.

Der schlauchförmige Radeinsatz generiert Strom und/oder Wärme und gibt diese Energie vorzugsweise an Akkumulatoren / Batterien oder Wärmespeicher ab oder führt diese Energie direkt einem Antrieb, beispielsweise einem Elektromotor in einem Elektro- oder Hybridfahrzeug zu. Wärme kann vorzugsweise auch direkt an das Fahrzeuginnere abgegeben werden, beispielsweise, um bei Elektrofahrzeugen die Heizung zu unterstützen und die Batterien zu entlasten.

Im Folgenden wird die Erfindung beispielhaft anhand einer bevorzugten Ausführungsform eines schlauchförmigen Radeinsatzes mit Nanotech-Materialien beschrieben.

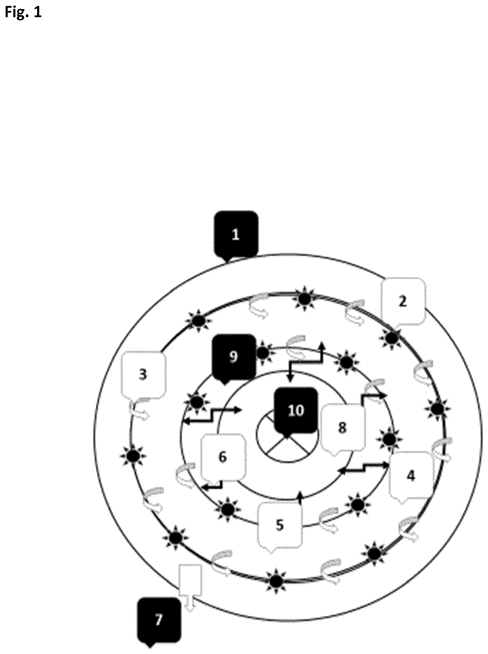

Die Figur 1 zeigt dazu ein Fahrzeugrad mit den Merkmalen 1 bis 10.

| | | | | | |
|---|---|---|---|---|---|
| (1) | Reifen | (2) | Druckstellen | (3) | Reibung |
| (4) | Radeinsatz Typ A | | | (5) | Radeinsatz Typ B |
| (6) | Leiter | (7) | Ventil | (8) | Kontaktfläche zur Energieübertragung |
| (9) | Radfelge | (10) | Radaufhängung | | |

Die Strom-, Energie- und Wärme-Erzeugung erfolgt zwischen dem Reifen (1) und der Radfelge (9) über Druck und/oder Reibung. Bei der Stromerzeugung durch Druck und Deformation führen Druckstellen (2) zwischen Reifen (1), Radfelge (9) und Nanotech-Materialien (z.B. schlauchförmiger Radeinsatz 4 oder 5) zu elektrischer Spannung bei Bewegung und/oder Stillstand des Reifens (1). Die permanenten Druckstellen (2) zwischen Reifen (1), Radfelge (9) und Nanotech-Materialien (z.B. schlauchförmiger Radeinsatz 4 oder 5) befinden sich sowohl im Inneren des Reifens (1) und/oder im Inneren und Äußeren des schlauchförmigen Radeinsatzes (z.B. Schlauch 4 oder 5), dies z.B. auf allen Flächen zwischen Reifen (1), Radfelge (9) und Nanotech-Materialien (360°).

Bei der Stromerzeugung durch Reibung führt der permanente Reibungsprozess zwischen Reifen (1), Radfelge (9) und Nanotech-Materialien (z.B. schlauchförmiger Radeinsatz 4 oder 5) in Bewegung und/oder im Stillstand zu elektrischer Spannung. Der permanente Reibungsprozess zwischen Reifen (1), Radfelge (9) und Nanotech-Materialien (z.B. schlauchförmiger Radeinsatz 4 oder 5) erfolgt sowohl im Inneren des Reifens (1) und/oder im Inneren und Äußeren des Nanotech-Schlauches (z.B. schlauchförmiger Radeinsatz 4 oder 5), dies z.B. auf allen Berührungsflächen zwischen Reifen (1), Radfelge (9) und Nanotech-Materialien (360°).

Bei dem schlauchförmigen Radeinsatz vom Materialtyp A (4) kann es sich um einen mit Luft, Gasen oder Flüssigkeiten befüllbaren oder aufblasbaren Schlauchförmiger Radeinsatz aus Nanotech-Materialien handeln. Bei der Befüllung bzw. dem Aufblasen des schlauchförmigen Radeinsatzes aus Nanotech-Materialien durch Luft, Gase oder Flüssigkeiten erweitert bzw. vergrössert sich das Volumen und es entsteht elektrische Spannung, dies in Bewegung beim Fahren und/oder im Stillstand.

Bei dem schlauchförmigen Radeinsatz vom Materialtyp B (5), vorzugsweise ein kompakter, fester schlauchförmiger Radeinsatz aus Nanotech-Materialien, entsteht durch Druck und/oder Reibung elektrische Spannung, dies in Bewegung beim Fahren und/oder im Stillstand.

Ein elektrischer Leiter (6), vorzugsweise Kabel und Stecker, dient zur Übertragung der elektrischen Spannung, bzw. Strom, Energie und Wärme zwischen den Nanotech-Materialien und der Kontaktfläche (8) zur Energieübertragung.

Das Ventil (7) dient zum Befüllen bzw. Aufblasen des schlauchförmigen Radeinsatzes aus Nanotech-Materialien (z.B. der Schlaucheinsätze 4 und 5) mit Luft, Gasen oder Flüssigkeiten.

Die Kontaktfläche (8) dient zur Übertragung des Stroms, der Energie und/oder der Wärme, vorzugsweise an Speichermedien wie Batterien / Akkumulatoren.

Ein solcher energieerzeugender schlauchförmiger Radeinsatz findet insbesondere Anwendung bei LKWs, PKWs, Bussen, Fahrrädern, Motorrädern, Traktoren, elektrischen Rollstühlen, elektrische Rollbretter, Rasenmäher, Flugzeuge, elektrische Golffahrzeuge, etc.

## Patentansprüche

1. Ein zwischen Reifen (1) und Radfelge (9) umfasster schlauchförmiger Radeinsatz (4/5), der mit Luft, Gasen oder Flüssigkeiten befüllbar ist und aus Nanotech-Materialien, vorzugsweise Kohlenstoffnanoröhrchen, besteht bzw. diese enthält und/oder damit beschichtet ist, **dadurch gekennzeichnet dass** bei mechanischer und/oder thermischer Einwirkung auf den schlauchförmigen Radeinsatz (4/5) Druck und/oder Wärme übertragen wird und die Nanotech-Materialien elektrische Energie und/oder Wärmeenergie erzeugen und diese Energie nutzbar vom schlauchförmigen Radeinsatz (4/5) abgeleitet wird.

2. Eine Vorrichtung, vorzugsweise ein Fahrzeug umfassend wenigstens einen schlauchförmigen Radeinsatz (4/5) nach Anspruch 1.

3. Vorrichtung nach Anspruch 2, bei der das Fahrzeug wenigstens 2, vorzugsweise 4 oder weitere schlauchförmige Einsätze (4/5) nach Anspruch 1 enthält.

4. Vorrichtung nach Anspruch 2 oder 3, wobei das Fahrzeug ein Elektro- oder Hybridfahrzeug ist.

## Claims

1. A tubular wheel insert (4/5) that is comprised between a tyre (1) and a wheel rim (9), which tubular wheel insert is fillable with air, gasses or liquids and consists of and/or is coated with nanotech materials, preferably carbon nanotubes, **characterized in that** pressure and/or heat is transferred upon mechanical and/or thermal impact on the tubular wheel insert (4/5) and the nanotech materials produce electrical and/or thermal energy which energy is usably dissipated from the tubular wheel insert (4/5).

2. A device, preferably a vehicle, comprising at least one tubular wheel insert (4/5) according to claim 1.

3. Device according to claim 2, wherein the vehicle contains at least 2, preferably 4 or more tubular inserts (4/5) according to clam 1.

4. Device according to claim 2 or 3, wherein the device is an electric or hybrid vehicle.

## Revendications

1. Insert de roue tubulaire (4/5) interposé entre un bandage pneumatique (1) et une jante de roue (9), pouvant être rempli d'air, de gaz ou de liquides et étant constitué de matériaux nanotechnologiques, de préférence de nanotubes de carbone, ou bien contenant et/ou étant revêtu de ceux-ci, **caractérisé en ce que** l'influence d'un effet mécanique et/ou thermique sur l'insert de roue tubulaire (4/5) donne lieu à une transmission de pression et/ou de chaleur et à une génération d'énergie électrique et/ou thermique par les matériaux nanotechnologiques ainsi qu'à une évacuation de façon utilisable de cette énergie à partir de l'insert de roue tubulaire (4/5).

2. Dispositif, de préférence un véhicule, comprenant au moins un insert de roue tubulaire (4/5) selon la revendication 1.

3. Dispositif selon la revendication 2, dans lequel le véhicule contient au moins 2, de préférence 4 ou plus, inserts tubulaires (4/5) selon la revendication 1.

4. Dispositif selon les revendications 2 ou 3, dans lequel le véhicule est un véhicule électrique ou hybride.
